(19) Europäisches Patentamt / European Patent Office / Office européen des brevets

(11) **EP 3 203 209 A1**

(12) **EUROPEAN PATENT APPLICATION**

(43) Date of publication:
**09.08.2017 Bulletin 2017/32**

(51) Int Cl.:
**G01N 9/00** *(2006.01)* **G01F 1/10** *(2006.01)*
**G01N 11/14** *(2006.01)* **G01F 1/115** *(2006.01)*

(21) Application number: **16290023.7**

(22) Date of filing: **04.02.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicants:
• **Services Pétroliers Schlumberger**
**75007 Paris (FR)**
Designated Contracting States:
**FR**
• **Schlumberger Technology B.V. (STBV)**
**2514 JG The Hague (NL)**
Designated Contracting States:
**AL AT BE BG CH CY CZ DE DK EE ES FI GB GR HR HU IE IS IT LI LT LU LV MC MK MT NL NO PL PT RO RS SE SI SK SM TR**

(72) Inventors:
• **Vigneaux, Pierre**
**92140 Clamart (FR)**
• **Amsellem, Olivier**
**92140 Clamart (FR)**
• **Rivas, Caroline Stephan**
**92140 Clamart (FR)**

(74) Representative: **Rzaniak, Martin et al**
**Etudes & Productions Schlumberger**
**1, rue Henri Becquerel, BP 202**
**92142 Clamart Cedex (FR)**

(54) **DOWNHOLE FLUID PROPERTY MEASUREMENT**

(57) An apparatus having an impeller for measuring a property of a fluid in a wellbore, wherein an effective density of the impeller is substantially not greater than a density of the fluid. The apparatus is operable within a fluid flowing in a wellbore that extends into a subterranean formation, thereby measuring a property of the flowing fluid.

**FIG. 3**

EP 3 203 209 A1

**Description**

**Background of the Disclosure**

Wells for producing oil from oil fields generally produce a mixture of oil, gas, water, and suspended solids. Often the produced fluid is rich in water, particularly from mature oil fields. Accurate production logging may provide valuable information indicative of properties of the fluid in the well. Such information may be further indicative of a wide variety of aspects related to performance of the well.

For example, production logging may include identification of locations of entry ports for oil, gas, and water respectively. Once a location of a major water port has been found, remedial operations may be carried out on the well, potentially resulting in substantial increases in oil production. However, in some downhole environments, it is difficult to generate useful logging data with known techniques.

**Summary of the Disclosure**

This summary is provided to introduce a selection of concepts that are further described below in the detailed description. This summary is not intended to identify indispensable features of the claimed subject matter, nor is it intended for use as an aid in limiting the scope of the claimed subject matter.

The present disclosure introduces an apparatus having an impeller for measuring a property of a fluid in a wellbore. An effective density of the impeller is substantially not greater than a density of the fluid.

The present disclosure also introduces a method including operating an apparatus within a fluid flowing in a wellbore that extends into a subterranean formation, thereby measuring a property of the flowing fluid. The apparatus incudes an impeller having an effective density that is substantially not greater than a density of the flowing fluid.

These and additional aspects of the present disclosure are set forth in the description that follows, and/or may be learned by a person having ordinary skill in the art by reading the materials herein and/or practicing the principles described herein. At least some aspects of the present disclosure may be achieved via means recited in the attached claims.

**Brief Description of the Drawings**

The present disclosure is best understood from the following detailed description when read with the accompanying figures. It is emphasized that, in accordance with the standard practice in the industry, various features are not drawn to scale. In fact, the dimensions of the various features may be arbitrarily increased or reduced for clarity of discussion.

FIG. 1 is a schematic perspective view of at least a portion of an example implementation of apparatus according to one or more aspects of the present disclosure.

FIG. 2 is a graph related to one or more aspects of the present disclosure.

FIG. 3 is a schematic side view of a portion of an example implementation of the apparatus shown in FIG. 1 according to one or more aspects of the present disclosure.

FIG. 4 is a schematic side view of a portion of an example implementation of the apparatus shown in FIG. 3 according to one or more aspects of the present disclosure.

FIG. 5 is an axial view of a portion of an example implementation of the apparatus shown in FIGS. 3 and 4 according to one or more aspects of the present disclosure.

FIG. 6 is an axial view of a portion of another example implementation of the apparatus shown in FIGS. 3 and 4 according to one or more aspects of the present disclosure.

FIG. 7 is a sectional view of at least a portion of an example implementation of apparatus according to one or more aspects of the present disclosure.

FIG. 8 is a sectional view of at least a portion of an example implementation of apparatus according to one or more aspects of the present disclosure.

FIG. 9 is a flow-chart diagram of at least a portion of a method according to one or more aspects of the present disclosure.

**Detailed Description**

It is to be understood that the following disclosure provides many different embodiments, or examples, for implementing different features of various embodiments. Specific examples of components and arrangements are described below to simplify the present disclosure. These are, of course, merely examples and are not intended to be limiting. In addition, the present disclosure may repeat reference numerals and/or letters in the various examples. This repetition is for simplicity and clarity, and does not in itself dictate a relationship between the various embodiments and/or configurations discussed. Moreover, the formation of a first feature over or on a second feature in the description that follows may include embodiments in which the first and second features are formed in direct contact, and may also include embodiments in which additional features may be formed interposing the first and second features, such that the first and second features may not be in direct contact.

Rotatable members, such as impellers, which may also be known as spinners, are utilized in various industries for measuring properties of a fluid. For example, in the oil and gas industry, impellers may be utilized in fluid sensors in a downhole environment to generate or otherwise provide signals or information indicative of or related to fluid velocity, fluid direction, fluid composition, fluid phase, and other fluid properties. Each fluid sensor may be associated with a phase sensor (i.e., oil, water, or gas sensor) and a caliper sensor to estimate or otherwise determine well production. The performance of each fluid, phase, and caliper sensor may affect the accuracy of such estimation. Accordingly, one or more aspects of the present disclosure relate to a fluid sensor and/or an impeller utilized in the fluid sensor for measuring properties of a production fluid flowing along a wellbore to conduct production logging measurements.

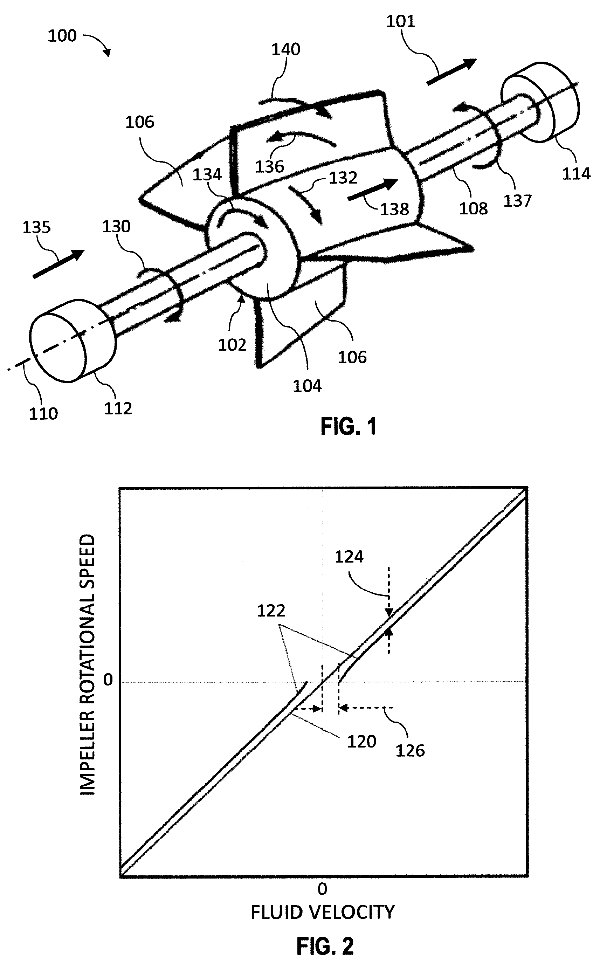

FIG. 1 is a perspective view of at least a portion of an example implementation of a fluid sensor 100 according to one or more aspects of the present disclosure. The fluid sensor 100 includes an impeller 102 comprising a hub 104 and a plurality of blades 106 disposed about the hub 104. The impeller 102 may be fixed on a shaft 108 rotatably supported at opposing ends by corresponding rotational bearings 112, 114, such as may permit the impeller 102 to freely rotate about an axis of rotation 110 along a plane perpendicular to the axis of rotation 110. During operations, the fluid sensor 100 may be disposed along a fluid stream 135 flowing past the impeller 102 and imparting an input torque 136 to the blades 106. The input torque 136 may then cause the impeller 102 to rotate about the axis of rotation 110, as indicated by arrow 137.

FIG. 2 is a graph related to one or more aspects of the present disclosure. Curve 120 shows a relationship between velocity of a fluid moving past an ideal impeller and rotational speed of the ideal impeller. As shown, the ideal impeller rotates at a speed that is directly proportional to the velocity of the fluid, wherein the slope of the curve 120 is controlled by a pitch of the ideal impeller. However, in reality, an impeller does not operate ideally or in an ideal environment. For example, friction forces and drag forces between a non-ideal impeller and other portions of a fluid sensor and/or a fluid surrounding the non-ideal impeller may cause the non-ideal impeller to rotate at a speed that is different from the rotational speed of the ideal impeller. Curve 122 shows a relationship between the velocity of the fluid moving past the non-ideal impeller and rotational speed of the non-ideal impeller. As shown, the non-ideal impeller rotates at a speed that is less than the rotational speed of the ideal impeller. The difference between the rotational speed of the non-ideal impeller and the rotational speed of the ideal impeller is known as slip 124, which may be caused by various retarding torques imparted to the non-ideal impeller by the fluid surrounding the non-ideal impeller and/or other portions of the fluid sensor. These retarding torques may include, for example, a bearing retarding torque, a hub fluid drag torque, a hub disc friction torque, and a blade tip clearance drag torque. Furthermore, the non-ideal impeller may not rotate to detect fluid flow until the fluid moving past the non-ideal impeller reaches a minimum velocity known as a start flow 126. The start flow phenomenon is partly caused by friction and/or stiction between a shaft supporting the impeller and portions of the fluid sensor supporting the shaft. Therefore, efficiency of an impeller may be affected by the environment in which it operates and the design of the impeller and/or other portions of the fluid sensor.

Referring again to FIG. 1, the bearing retarding torque 130 may be caused by the rotational bearings 112, 114 or other members on which the shaft 108 is supported. The bearings 112, 114 may be exposed to the weight of the impeller 102 (from which buoyancy force may be deducted) and a drag force 138 caused by the fluid stream 135 moving past the impeller 102. The weight of the impeller 102 and the drag force 138 may generate the bearing retarding torque 130 causing a braking effect that is a function of the rotational speed of the impeller 102.

The fluid surrounding the impeller 102 may generate additional retarding torques, such as the hub fluid drag torque 132 and/or the hub disc friction torque 134. The magnitudes of these fluid-generated friction torques 132, 134 partially depend on the fluid properties, such as viscosity, flow type, flow velocity, etc. For example, the fluid present between two adjacent blades 106 may present resistance to rotation, causing the hub fluid drag torque 132, which may counteract the input torque 136 imparted to the blades 106 by the fluid stream 135.

As the impeller 102 rotates in the fluid, the blades 106 may face various stationary portions (not shown) of the fluid sensor 100 and/or a fluid conduit containing the fluid sensor 100, such as deflectors, housing, casing, etc. At the interface of the blades 106 and the stationary portions, viscosity of the fluid tends to oppose the movement and, thus, the rotation of the blades 106, resulting in the blade tip clearance drag torque 140 being applied to the impeller 102.

Furthermore, depending on angular position of the impeller 102, additional retarding torque(s) may result if static and dynamic balancing of the impeller 102 is not achieved. For example, dynamic balancing may eliminate or reduce vibrations as the impeller 102 rotates. Vibrations of the impeller 102 may intensify or cause additional friction between the impeller 102, the bearings 112, 114, and the fluid.

One or more of the retarding torques may be reduced by decreasing effective density of the impeller 102. The effective density of the impeller 102 may be the volume-averaged density of the impeller 102. In an example implementation, the effective density of the impeller 102 may be configured to be substantially not greater that a density of the fluid surrounding the impeller 102. Accordingly, if the effective density of the impeller 102 is not greater than the density of the fluid, the impeller 102 may be substantially buoyant in the fluid, which, in turn, may reduce one or more of the retarding torques and result in more accurate fluid measurements.

In a downhole environment, density of a downhole fluid may vary depending on fluid composition, well type, depth, and other environmental factors. The downhole fluid may include water, oil, gas, and combinations thereof. Water density may range between about 1.0 specific gravity units (SGU) and about 1.15 SGU, depending on temperature and/or salinity, while oil density may range between about 0.8 SGU and about 0.95 SGU. Accordingly, the impeller 102 may be configured to comprise an effective density that is substantially similar to the mass density of water. The impeller 102 may also comprise an effective specific gravity that is substantially similar to the specific gravity of water, thus ranging between about 1.0 SGU and about 1.15 SGU. The impeller 102 may also be configured to have an effective specific gravity ranging between about 0.8 SGU and about 1.1 SGU, thus permitting the impeller 102 to be substantially buoyant within oil, water, and combinations thereof.

Rotational movement of an impeller, such as the impeller 102, may be demonstrated by Equation (1).

$$I_{impeller} \frac{d\omega}{dt} = T_d - T_f \qquad\qquad (1)$$

where $I$ is the moment of inertia of the impeller, co is the angular velocity of the impeller, $T_d$ is the driving torque applied to the impeller, and $T_f$ is the sum of the friction or retarding torques applied to the impeller. Equation (1) shows that the moment of inertia and, thus, mass of the impeller also affects the rotational movement of the impeller. Accordingly, reducing the moment of inertia may further decrease the start flow of the impeller.

Reducing the moment of inertial may also increase responsiveness or sensitivity of the impeller, such as by reducing the amount of input torque and time sufficient to induce rotation of the impeller or a change in the direction of rotation of the impeller. Increased sensitivity may also be applicable to oil/water flows where phase densities may be similar, but phase velocities may be substantially different *(e.g.,* 15 centimeters per second oil phase velocity in stagnant water). Improved sensitivity may also be applicable to other multiphase conditions, such as those involving gas phase even when gas density in downhole conditions is substantially lower than oil density. For example, gas density in a downhole fluid may be about 0.1 SGU, while oil density may be about 0.8 SGU.

The moment of inertial may be reduced by reducing the effective density and/or mass of an impeller. The effective density of the impeller may be controlled by density of the material forming the impeller and/or the construction of the material. In an example implementation, the material forming the impeller may be a polymer, such as polyether ether ketone (PEEK) or another compound that may be molded in the form of the impeller, including a hub and/or a plurality of blades. The material may comprise voids or spaces, such as may function to reduce the effective density and/or the mass of the impeller. The material forming the impeller may also comprise particles embedded in the polymer, wherein a mass density of each particle is substantially less than a mass density of the polymer. Accordingly, the effective density of the impeller may be customized, such as by selecting a material having a predetermined ratio of the voids and/or the particles to the polymer. For example, the voids and/or the particles may comprise not more than about 50% of the material by volume, such as to avoid excessive viscosity and associated risk of breakage during the molding process. The particles may be hollow particles or contain voids or spaces, such as, for example, hollow glass beads. The glass beads may include a diameter ranging between about 10 micron and about 20 micron and a wall thickness ranging between about 0.5 and about 1.5 micron. The glass beads may have a pressure rating of up to about 30,000 pounds per square inch (PSI) and a temperature rating of up to about 350 °Celsius.

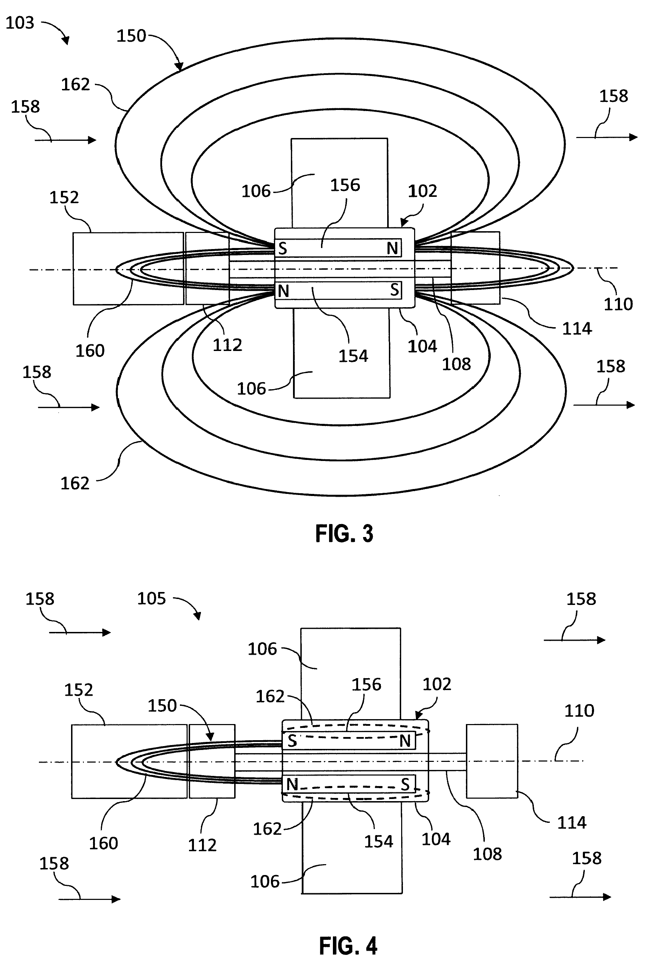

FIG. 3 is a schematic side view of an example implementation of the fluid sensor 100 shown in FIG. 1 according to one or more aspects of the present disclosure, and designated in FIG. 3 by reference numeral 103. The fluid sensor 103 is substantially similar in structure and operation to the fluid sensor 100 depicted in FIG. 1, including where indicated by like reference numbers, except as described below.

Detection of rotational speed and direction of the impeller 102 may be performed by creating a magnetic field 150 rotating with the impeller 102 and detecting the magnetic field 150 with a magnetic field sensor 152, such as a Hall effect sensor. One or more sensor magnets 154, 156 each comprising a north pole and a south pole, as indicated by letters N and S, respectively, may be embedded in, carried by, and/or otherwise disposed in association with the impeller 102. The sensor magnets 154, 156 may be embedded in the blades 106 or in the hub 104. Embedding the sensor magnets 154, 156 in the blades 106 may increase the quantity of pulses generated by the magnetic field sensor 152 per rotation of the impeller 102, while embedding the sensor magnets 154, 156 in the hub 104 may minimize or reduce the moment of inertia of the impeller 102. The impeller 102 may be formed by molding or otherwise shaping one or more of the materials described above to form the hub 104 and the blades 106. However, the impeller 102 may also include a metallic (e.g., aluminum), ceramic, or plastic hub 104, while the blades 106 may be molded around the hub 104 utilizing one or more of the materials described above.

Fluid sensors currently utilized in the art include magnets that attract metallic debris and other particles, including ferromagnetic debris, which may accumulate about an impeller adjacent the magnetic poles of the magnets. Accumulation of debris may decrease sensor performance or even prevent operation of the impeller by increasing the mass of the impeller, causing the impeller to become unbalanced, and increasing mechanical friction that may impede or even prevent rotation of the impeller. The magnets utilized in the current fluid sensors are oriented with the magnetic poles perpendicular to an axis of rotation of the impeller. Such configuration generates a magnetic field that is roughly represented by an ellipsoid having an axis oriented perpendicular to the axis of rotation of the impeller. The magnetic field extends outwardly on both sides of the impeller through the fluid surrounding the impeller and may even reach the casing or another tubular, which may interfere with the performance of the fluid sensor or even cause a magnetic lock preventing the rotation of the impeller.

To reduce the accumulation of debris along the impeller 102, the magnetic field 150 generated by the sensor magnets 154, 156 may be focused in a predetermined direction and/or confined to reduce or prevent the magnetic field 150 from extending around the impeller 102 to attract debris from a fluid stream 158 flowing around the impeller 102.

As shown in FIG. 3, the sensor magnets 154, 156 may be embedded within the hub 104 and the magnetic poles of each of the sensor magnets 154, 156 may be orientated substantially parallel with respect to the axis of rotation 110. Each sensor magnet 154, 156 may be radially offset from the axis of rotation 110. The magnetic field 150 generated by such magnet configuration may include an inner magnetic field portion 160 having an axis that extends along or parallel to the axis of rotation 110 and an outer magnetic field portion 162 extending on opposing sides of the magnets 154, 156 and the inner magnetic field portion 160. The inner magnetic field portion 160 is focused along the axis of rotation 110 and is substantially stronger or denser than the outer magnetic field portion 162 extending into the fluid stream 158 around the impeller 102. The magnetic field sensor 152 may be disposed along the axis of rotation 110 or otherwise along a path of the inner magnetic field portion 160. Although FIG. 3 shows the fluid sensor 103 comprising two magnets 154, 156, it is to be understood that the fluid sensor 103 may include a single magnet embedded within the hub 104 with its magnetic poles and/or longitudinal axis orientated substantially parallel to and/or radially offset from the axis of rotation 110.

Furthermore, as a magnetic field is proportional to a mass of a magnet, the mass of the sensor magnets 154, 156 may be reduced (with respect to the magnets of the currently utilized fluid sensors) while maintaining a magnetic field intensity sufficient to permit detection by the magnetic field sensor 152. Reducing the mass of the sensor magnets 154, 156 may further reduce the mass and moment of inertia of the impeller 102 and, thus, further improve the performance of the fluid sensor 103 as described above.

FIG. 4 is a schematic side view of an example implementation of the fluid sensor 103 shown in FIG. 3 according to one or more aspects of the present disclosure, and designated in FIG. 4 by reference numeral 105. The fluid sensor 105 is substantially similar in structure and operation to the fluid sensor 103 depicted in FIG. 3, including where indicated by like reference numbers, except as described below.

The magnetic field 150 generated by the sensor magnets 154, 156 may also be confined to reduce or prevent the outer magnetic field portion 162 from extending outwardly past the impeller 102 into the fluid stream 158. For example, the sensor magnets 154, 156 embedded within the hub 104 may be at least partially enclosed within a high magnetic permeability material, such as a nickel-iron alloy known as a Mu-metal. The high magnetic permeability material may canalize the magnetic field 150 to prevent or minimize its extension into the fluid stream 158. In an example implementation, the sensor magnets 154, 156 may be at least partially enclosed within the hub 104 formed from or comprising the high magnetic permeability material. As shown in FIG. 4, the hub 104 conducts the outer magnetic field portion 162 between the north and south poles of the sensor magnets 154, 156, preventing the outer magnetic field portion 162 from extending outwardly into the fluid stream 158. As the magnetic poles closest to the magnetic field sensor 152 are not enclosed by the high magnetic permeability material, the inner magnetic field portion 160 is free to extend along the axis of rotation 110 toward the magnetic field sensor 152 while the inner magnetic field portion 160 on the opposing side is conducted by the high magnetic permeability material of the hub 104. As further shown in FIG. 4, the inner magnetic field portion 160 extends further along the axis of rotation 110 than the outer magnetic field portion 162 in a direction perpendicular to the axis of rotation 110.

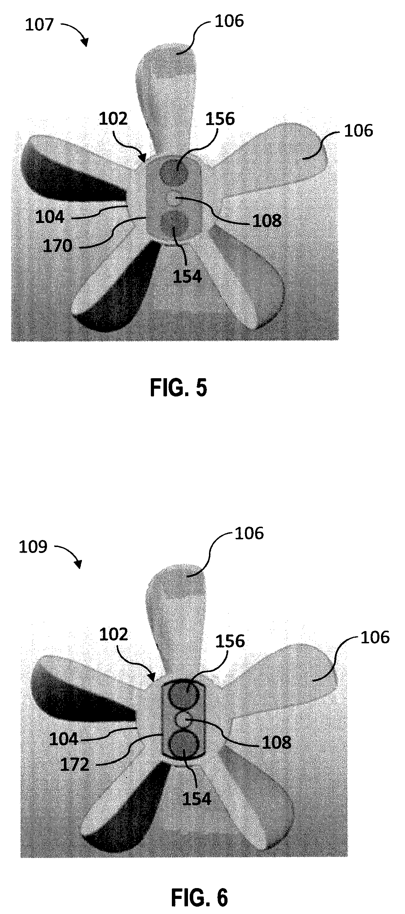

FIGS. 5 and 6 are axial views of a portion of example implementations of the fluid sensors 103, 105 shown in FIGS. 3 and 4, respectively, according to one or more aspects of the present disclosure, and designated in FIGS. 5 and 6 by reference numeral 107, 109, respectively. The fluid sensors 107, 109 are substantially similar in structure and operation to the fluid sensors 103, 105, including where indicated by like reference numbers, except as described below.

As shown in FIG. 5, the sensor magnets 154, 156 may be at least partially sleeved or enclosed within a casing 170 forming an inner portion of the hub 104. The low density material described above, may be molded around the casing 170 to form the blades 106 and an outer portion or layer of the hub 104. The casing 170 may be formed from or comprise the metallic material, such as aluminum, resulting in the formation of the magnetic field 150 described above and shown in FIG. 3. The casing 170 may instead be formed from or comprise the high magnetic permeability material, resulting in the formation of the magnetic field 150 described above and shown in FIG. 4.

As shown in FIG. 6, the sensor magnets 154, 156 may be at least partially sleeved or enclosed within a casing 172 forming an inner portion of the hub 104. The low density material described above, may be molded around the casing 172 to form the blades 106 and an outer portion or layer of the hub 104. The casing 172 may be thinner or more closely conform to the sensor magnets 154, 156 than the casing 170, such as to reduce the mass and, thus, the effective density and the moment of inertia of the impeller 102. The effective density of the impeller 102 may be the volume-averaged densities of the blades 106 and the hub 102, including the sensor magnets 154, 156, the casing 172, and the outer portion of the hub 104. The casing 172 may be formed from or comprise the metallic material, such as aluminum, resulting in the magnetic field 150 described above and shown in FIG. 3. The casing 172 may instead be formed from or comprise the high magnetic permeability material, resulting in the magnetic field 150 described above and shown in FIG. 4.

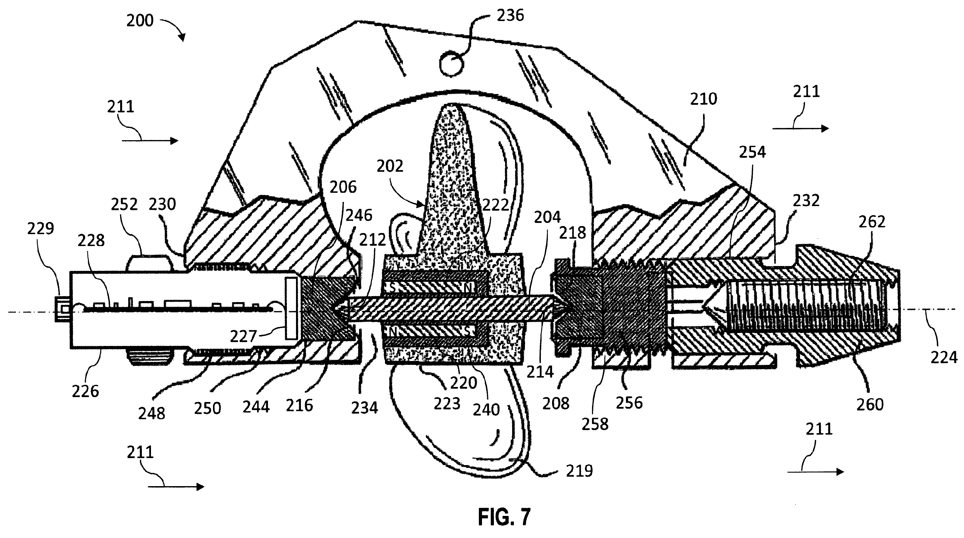

FIG. 7 is a sectional view of at least a portion of an example implementation of a fluid sensor 200 according to one or more aspects of the present disclosure. The fluid sensor 200 is substantially similar in structure and operation to the fluid sensors 100, 103, 105, 107, 109, except as described below.

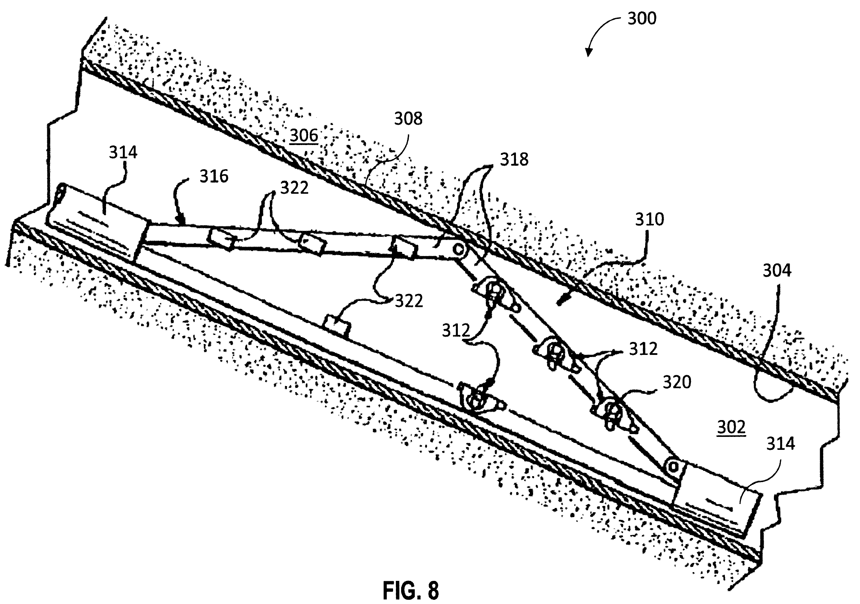

The fluid sensor 200 comprises an impeller 202 disposed about a shaft or spindle 204 for rotatably supporting the impeller 202 between two bearing blocks 206, 208. A support member 210 may extend between and fixedly support the bearing blocks 206, 208. The support member 210 may be stirrup-shaped and have opposing end portions 230, 232 connected with or otherwise holding the bearing blocks 206, 208 in a predetermined relative position, such that the impeller 202 may be installed in a space 234 extending between the bearing blocks 206, 208. The profile of the support member 210 may be aerodynamically designed to minimize disturbance to the fluid flowing around the fluid sensor 200, as indicated by arrows 211. The support member 210 may comprises an orifice 236, which may be utilized to couple the fluid sensor 200 to another member or tool, such as a production logging tool shown in FIG. 8.

Opposing ends 212, 214 of the spindle 204 may comprise a generally conical configuration, such as may be received by corresponding conical recess 216, 218 formed within the bearing blocks 206, 208. The spindle 204 may be formed from a hard and/or corrosion resistant material, such as tungsten carbide. The bearing blocks 206, 208 may be formed from a material with a low coefficient of friction, such as a precious stone, including a diamond, sapphire, or corundum. The bearing blocks 206, 208 may also be formed from a non-magnetic tungsten carbide. The generally conical recesses 216, 218 of the bearing blocks 206, 208 and the generally conical ends 212, 214 of the spindle 204 minimize or otherwise reduce friction between the spindle 204 and the bearing blocks 206, 208. Due to the low friction of the bearing block-spindle assembly, the impeller 202 may be sensitive to low fluid velocities, for example of the order of about five centimeters per second or less.

The bearing block 206 may be at least partially disposed within a bore 244 extending through the end portion 230 of the support member 210 along the axis of rotation 224. The bearing block 206 may be retained in position between a shoulder 246 on one side and a magnetic field sensor 226 on the other. The magnetic field sensor 226 may include external threads 248, such as may permit the magnetic field sensor 226 to engage internal threads 250 of the bore 244 to advance toward and contact the bearing block 206. The magnetic field sensor 226 may comprise an outer portion 252 comprising flat surfaces, which may permit the magnetic field sensor 226 to be rotated.

The bearing block 208 may be at least partially disposed within a bore 254 extending through the end portion 232 of the support member 210 along the axis of rotation 224. The bearing block 208 may be embedded within a threaded base 256 operable to engage internal threads 258 of the bore 254 to adjust an axial position of the bearing block 208 along the axis of rotation 224. Accordingly, once the impeller 202 is inserted between the bearing blocks 206, 208 and the bearing block 208 is adjusted to an intended axial position, a stop member 260 may be inserted into the bore 254 until the stop member 260 contacts the bearing block 208. An expansion member 262 may be inserted into the stop member 260 to expand a portion of the stop member 260 against a wall of the bore 254 to lock the stop member 260 in position.

The impeller 202 may be at least partially formed from the low density material and/or other materials described above, such that the effective density of the impeller 202 may be substantially not greater than a density of the fluid surrounding the impeller 202. As further described above, the effective specific gravity of the impeller 202 may be between about 0.8 and about 1.1, such that the impeller 202 may be substantially buoyant in the fluid surrounding the impeller 202. Also, the effective density of the impeller 202 may be substantially similar to the mass density of water.

The impeller 202 may comprise a plurality of blades 219 disposed about a hub 223. One or more magnets 220, 222 may be embedded within the hub 223 and radially offset from the axis of rotation 224 of the impeller 202. The magnets 220, 222 may be oriented such that the poles, indicated by letters N and S, are aligned substantially parallel to the axis of rotation 224 and have opposing polar orientations. The magnets 220, 222 are operable to generate a magnetic field (shown in FIGS. 3 and 4) to excite the magnetic field sensor 226, which, in turn, may be operable to generate a signal or information related to rotational speed and/or direction of the impeller 202. The magnets 220, 222 may be or comprise, for example, samarium cobalt magnets. The sensor 226 may include one or more magnetic sensitive cells 227 and an electronic assembly 228 comprising electronic components, such as comparators, receptors, amplifiers, and/or other components collectively operable to generate the signal or information related to the rotational speed and/or direction of the impeller 202. The sensor 226 may also include an electrical interface 229 for connecting the sensor 226 with an electrical conduit (not shown). The sensor 226 may be fixedly coupled with the support member 210 along the axis of rotation 224 of the impeller 202.

The impeller 202 may further comprise a casing 240 enclosing at least a portion of the magnets 220, 222. The casing 240 may be formed from or comprise a metallic material, such as aluminum, resulting in the formation of the magnetic field 150 described above and shown in FIG. 3. The casing 240 may be formed from or comprise the high magnetic permeability material, resulting in the formation of the magnetic field 150 described above and shown in FIG. 4.

FIG. 8 is a schematic view of at least a portion of an example downhole system 300 according to one or more aspects of the present disclosure, representing an example environment in which one or more apparatus described herein may be implemented, including to perform one or more methods and/or processes also described herein. However, it is to be understood that aspects of the present disclosure may also be implemented in environments other than downhole environments.

FIG. 8 depicts a sectional view of the Earth containing a wellbore 302 and a production logging tool 310 positioned within the wellbore 302. The wellbore 302 has a sidewall 304 and extends from the wellsite surface (not shown) into one or more subterranean formations 306. When utilized in cased-hole implementations, a cement sheath (not shown) may secure a casing 308 within the wellbore 302. However, one or more aspects of the present disclosure are also applicable to open-hole implementations, in which the cement sheath and the casing 308 have not yet been installed in the wellbore 302. The wellbore 302 may further include a completion/production tubular (not shown), which may be disposed within the casing 308 and contain the logging tool 310 therein.

The production logging tool 310 may be operable to monitor production fluid flowing through the wellbore 302. For example, the logging tool 310 may monitor rate of fluid flow, velocity of fluid flow, direction of fluid flow, composition of the production fluid, phase of the production fluid, and/or other fluid properties within the scope of the present disclosure. The logging tool 310 may comprise one or more fluid sensors 312, such as the fluid sensors 100, 103, 105, 107, 109, 200 described above. During conveyance, the production logging tool 310 may be lowered into a vertical, inclined, or horizontal portion of the wellbore via rods, tubulars, a wireline, or other conveyance means (not shown). The data acquired by the production logging tool 310 may be stored downhole or transmitted to the wellsite surface via the conveyance means or a telemetry system (not shown).

The production logging tool 310 may comprise a substantially cylindrical body 314, which may be operatively coupled with a deployable mechanism 316. The deployable mechanism 316 may comprise arms 318 pivotally coupled with each other and with the body 314. The arms 318 may be aligned in a substantially straight line during conveyance. However, during logging operations, the arms 318 may be pivoted against the sidewall 304, such as to prop or maintain the logging tool 310 in a predetermined portion of the wellbore 302. The fluid sensors 312 may be distributed substantially uniformly along one of the arms 318, such as may distribute the fluid sensors 312 at different vertical positions within the wellbore 302 when the arms 318 are pivoted against the sidewall 304 during logging operations. The fluid sensors 312 may be coupled to the arm 318, for example, with a split pin 320 that passes through the orifice 236 of the support member 310, as shown in FIG. 7. The other arm 318 may be equipped with other electrical and/or optical sensors 322 also distributed substantially uniformly along the arm 318. One or more of the fluid sensors 312 and the electrical and/or optical sensors 322 may be coupled along the body 314.

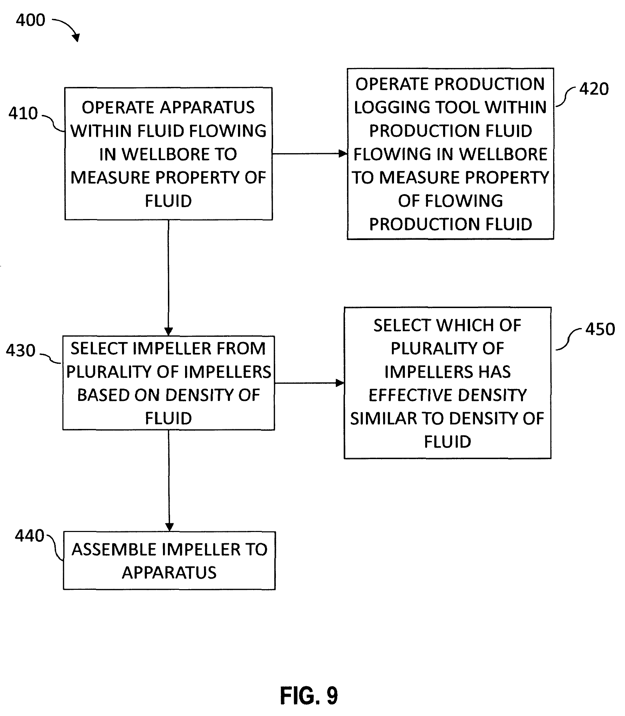

FIG. 9 is a flow-chart diagram of at least a portion of an example implementation of a method (400) according to one or more aspects of the present disclosure. The method (400) may be performed utilizing at least a portion of one or more implementations of the apparatus shown in FIGS. 1 and 3-8 and/or otherwise within the scope of the present disclosure.

The method (400) may comprise operating (410) an apparatus 200 within a fluid flowing 211 in a wellbore 302 that extends into a subterranean formation 306, thereby measuring a property of the flowing fluid 211, wherein the apparatus 200 comprises an impeller 202 having an effective density that is substantially not greater than a density of the flowing fluid 211, such that the impeller 202 may be substantially buoyant in the fluid.

The apparatus 200 may comprise at least a portion of a production logging tool 310 operable within the wellbore 302 and the fluid 211 may comprise a production fluid flowing in the wellbore 302. Operating (410) the apparatus may comprise operating (420) the production logging tool 310 within the production fluid 211 flowing in the wellbore 302 that extends into the subterranean formation 306, thereby measuring the property of the flowing production fluid 211. The effective density of the impeller 202 utilized in the method (400) may be substantially similar to the mass density of water and an effective specific gravity of the impeller 202 may be between about 0.8 and about 1.1.

Furthermore, the impeller 202 utilized in the method (400) may comprise a metallic hub 223 and a material molded around the hub 223 and forming a plurality of blades 219 that interact with the flowing fluid 211 to impart rotary motion to the hub 223. The effective density of the impeller 202 may be the volume-averaged densities of the metallic hub 223 and the material. In an implementation of the method (400), the material may comprise a polymer having voids.

The material may also comprise particles embedded in a polymer, such that a mass density of each particle is substantially less than a mass density of the polymer. The particles may be hollow, such as hollow glass beads, and the particles may comprise not more than about 50% of the material by volume.

The method (400) may further comprise selecting (430) the impeller 202 from a plurality of impellers 202 each having a different effective density, wherein selecting (430) is based on the density of the fluid, and assembling (440) the impeller 202 to the apparatus 200. The selecting (430) of the impeller 202 may comprise selecting (450) which of the plurality of impellers 202 has an effective density that is substantially similar to the density of the fluid. For example, in implementations in which the wellbore 302 is horizontal or highly deviated, such that water flows nearer the bottom side of the wellbore 302 while oil or gas flows at the top side of the wellbore 302, water and oil densities can be known before running the apparatus 200 in the wellbore 302, in which case at least one impeller 202 may have an effective density substantially matching the oil density at the top of the wellbore 302, and at least one other impeller 202 may have an effective density substantially matching the water density at the bottom side of the wellbore 302.

The impeller 202 utilized in the method (400) may be fixed on a rotating shaft 204 and comprise a sensor magnet 220 having a polar orientation substantially parallel to an axis of rotation 224 of the shaft 204. The sensor magnet 220 may comprise a longitudinal axis that is radially offset from the axis of rotation 224.

Furthermore, the impeller 202 utilized in the method (400) may be fixed on a rotating shaft and comprise first and second sensor magnets 220, 222, each having a polar orientation substantially parallel to an axis of rotation 224 of the shaft 204. The first and second sensor magnets 220, 222 may have opposing polar orientations.

Also, the sensor magnet 220 may be at least partially enclosed within a high magnetic permeability material 240 and the sensor magnet 220 may generate a magnetic field extending further in a first direction than in a second direction perpendicular to the first direction, and wherein the first direction is substantially parallel to the axis of rotation 224.

In view of the entirety of the present disclosure, a person having ordinary skill in the art will readily recognize that the present disclosure introduces an apparatus comprising an impeller for measuring a property of a fluid in a wellbore, wherein an effective density of the impeller is substantially not greater than a density of the fluid.

The impeller may be substantially buoyant in the fluid.

The apparatus may comprise at least a portion of a production logging tool operable within the wellbore, and the fluid may comprise a production fluid flowing in the wellbore.

The effective density of the impeller may be substantially similar to the mass density of water.

An effective specific gravity of the impeller may be between about 0.8 and about 1.1.

The impeller may comprise: a hub; and a material molded around the hub and forming a plurality of blades that interact with flow of the fluid to impart rotary motion to the hub, wherein the effective density of the impeller may be the volume-averaged densities of the hub and the material. The material may comprise a polymer having voids. The material may comprise particles embedded in a polymer, and a mass density of each particle may be substantially less than a mass density of the polymer. The particles may be hollow. The particles may be hollow glass beads. The particles may comprise not more than about 50% of the material by volume.

The impeller may be fixed on a rotating shaft and may comprise a sensor magnet having a polar orientation substantially parallel to an axis of rotation of the shaft. A longitudinal axis of the sensor magnet may be radially offset from the axis of rotation. The sensor magnet may be at least partially enclosed within a high magnetic permeability material. The sensor magnet may generate a magnetic field extending further in a first direction than in a second direction perpendicular to the first direction, wherein the first direction is substantially parallel to the axis of rotation.

The impeller may be fixed on a rotating shaft and may comprise first and second sensor magnets each having a polar orientation substantially parallel to an axis of rotation of the shaft. The first and second sensor magnets may have opposing polar orientations.

The present disclosure also introduces a method comprising operating an apparatus within a fluid flowing in a wellbore that extends into a subterranean formation, thereby measuring a property of the flowing fluid, wherein the apparatus comprises an impeller having an effective density that is substantially not greater than a density of the flowing fluid.

The impeller may be substantially buoyant in the fluid.

The apparatus may comprise at least a portion of a production logging tool operable within the wellbore, the fluid may comprise a production fluid flowing in the wellbore, and operating the apparatus may comprise operating the production logging tool within the production fluid flowing in the wellbore, thereby measuring the property of the flowing production fluid.

The effective density of the impeller may be substantially similar to the mass density of water.

An effective specific gravity of the impeller may be between about 0.8 and about 1.1.

The impeller may comprise: a hub; and a material molded around the hub and forming a plurality of blades that interact with the flowing fluid to impart rotary motion to the hub, wherein the effective density of the impeller may be the volume-averaged densities of the metallic hub and the material. The material may comprise a polymer having voids. The material may comprise particles embedded in a polymer, and a mass density of each particle may be substantially less than a mass density of the polymer. The particles may be hollow. The particles may be hollow glass beads. The particles may comprise not more than about 50% of the material by volume.

The method may further comprise: selecting the impeller from a plurality of impellers each having a different effective density, wherein selecting is based on the density of the fluid; and assembling the impeller to the apparatus. Selecting the impeller may comprise selecting which of the plurality of impellers has an effective density that is substantially similar to the density of the fluid.

The impeller may be fixed on a rotating shaft and may comprise a sensor magnet having a polar orientation substantially parallel to an axis of rotation of the shaft. A longitudinal axis of the sensor magnet may be radially offset from the axis of rotation. The sensor magnet may be at least partially enclosed within a high magnetic permeability material. The sensor magnet may generate a magnetic field extending further in a first direction than in a second direction perpendicular to the first direction, and the first direction may be substantially parallel to the axis of rotation.

The impeller may be fixed on a rotating shaft and may comprise first and second sensor magnets each having a polar orientation substantially parallel to an axis of rotation of the shaft. The first and second sensor magnets may have opposing polar orientations.

The foregoing outlines features of several embodiments so that a person having ordinary skill in the art may better understand the aspects of the present disclosure. A person having ordinary skill in the art should appreciate that they may readily use the present disclosure as a basis for designing or modifying other processes and structures for carrying out the same purposes and/or achieving the same advantages of the embodiments introduced herein. A person having ordinary skill in the art should also realize that such equivalent constructions do not depart from the scope of the present disclosure, and that they may make various changes, substitutions and alterations herein without departing from the spirit and scope of the present disclosure.

The Abstract at the end of this disclosure is provided to permit the reader to quickly ascertain the nature of the technical disclosure. It is submitted with the understanding that it will not be used to interpret or limit the scope or meaning of the claims.

**Claims**

1.  An apparatus comprising an impeller for measuring a property of a fluid in a wellbore, wherein an effective density of the impeller is substantially not greater than a density of the fluid.

2.  The apparatus of claim 1 wherein the effective density of the impeller is substantially similar to the density of water.

3.  The apparatus of claim 1 wherein an effective specific gravity of the impeller is between about 0.8 and about 1.1.

4.  The apparatus of any preceding claim wherein the impeller comprises:

    a hub; and
    a material molded around the hub and forming a plurality of blades that interact with flow of the fluid to impart rotary motion to the hub, wherein the effective density of the impeller is the volume-averaged densities of the hub and the material.

5.  The apparatus of claim 4 wherein the material comprises voids.

6.  The apparatus of claim 4 wherein the material comprises particles embedded in a polymer, wherein a density of each particle is substantially less than a density of the polymer.

7.  The apparatus of any preceding claim wherein the impeller is fixed on a rotating shaft and comprises a sensor magnet having a polar orientation substantially parallel to an axis of rotation of the shaft.

8.  The apparatus of claim 7 wherein a longitudinal axis of the sensor magnet is radially offset from the axis of rotation.

9.  The apparatus of claim 7 or 8 wherein the sensor magnet is at least partially enclosed within a high magnetic permeability material.

10. The apparatus of claim 7, 8, or 9 wherein the sensor magnet generates a magnetic field extending further in a first direction than in a second direction perpendicular to the first direction, and wherein the first direction is substantially parallel to the axis of rotation.

**11.** The apparatus of any one of claims 1-6 wherein the impeller is fixed on a rotating shaft and comprises first and second sensor magnets each having a polar orientation substantially parallel to an axis of rotation of the shaft.

**12.** A method comprising:

operating an apparatus within a fluid flowing in a wellbore that extends into a subterranean formation, thereby measuring a property of the flowing fluid, wherein the apparatus comprises an impeller having an effective density that is substantially not greater than a density of the flowing fluid.

**13.** The method of claim 12 wherein:

the apparatus comprises at least a portion of a production logging tool operable within the wellbore;
the fluid comprises a production fluid flowing in the wellbore; and
operating the apparatus comprises operating the production logging tool within the production fluid flowing in the wellbore, thereby measuring the property of the flowing production fluid.

**14.** The method of claim 12 or 13 further comprising:

selecting the impeller from a plurality of impellers each having a different effective density, wherein selecting is based on the density of the fluid; and
assembling the impeller to the apparatus.

**15.** The method of claim 14 wherein selecting the impeller comprises selecting which of the plurality of impellers has an effective density that is substantially similar to the density of the fluid.

**FIG. 1**

FLUID VELOCITY

**FIG. 2**

FIG. 3

FIG. 4

**FIG. 5**

**FIG. 6**

**FIG. 7**

FIG. 8

400

410 — OPERATE APPARATUS WITHIN FLUID FLOWING IN WELLBORE TO MEASURE PROPERTY OF FLUID

OPERATE PRODUCTION LOGGING TOOL WITHIN PRODUCTION FLUID FLOWING IN WELLBORE TO MEASURE PROPERTY OF FLOWING PRODUCTION FLUID — 420

430 — SELECT IMPELLER FROM PLURALITY OF IMPELLERS BASED ON DENSITY OF FLUID

SELECT WHICH OF PLURALITY OF IMPELLERS HAS EFFECTIVE DENSITY SIMILAR TO DENSITY OF FLUID — 450

440 — ASSEMBLE IMPELLER TO APPARATUS

**FIG. 9**

Europäisches
Patentamt

European
Patent Office

Office européen
des brevets

# EUROPEAN SEARCH REPORT

Application Number

EP 16 29 0023

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/126508 A1 (KUHLEMANN HOLGER [DE]) 21 May 2009 (2009-05-21) * paragraphs [0001] - [0054]; figures 1-6 * | 1-15 | INV.<br>G01N9/00<br>G01F1/10<br>G01N11/14<br>G01F1/115 |
| X | GB 984 941 A (GLACIER CO LTD) 3 March 1965 (1965-03-03) * page 1, line 9 - page 2, line 85 * | 1-6, 12-15 | |
| X | US 3 811 323 A (SWENSON G) 21 May 1974 (1974-05-21) * column 2, lines 33-67 * | 1,12 | |
| X | US 2012/160034 A1 (BARDON ROSS JAMES [GB] ET AL) 28 June 2012 (2012-06-28) * paragraphs [0076], [0077] * | 1-6, 12-15 | |
| A | US 2015/376963 A1 (ORBAN JACQUES [US] ET AL) 31 December 2015 (2015-12-31) * paragraphs [0045] - [0063] * | 1-15 | |
| A | US 2015/041122 A1 (VALSECCHI PIETRO [US]) 12 February 2015 (2015-02-12) * the whole document * | 1-15 | TECHNICAL FIELDS SEARCHED (IPC)<br><br>G01N<br>G01F |
| A | WO 90/06500 A1 (NOREN ANDERS [SE]) 14 June 1990 (1990-06-14) * the whole document * | 1,12 | |

The present search report has been drawn up for all claims

| Place of search | Date of completion of the search | Examiner |
|---|---|---|
| The Hague | 16 August 2016 | Cantalapiedra, Igor |

EPO FORM 1503 03.82 (P04C01)

## ANNEX TO THE EUROPEAN SEARCH REPORT
## ON EUROPEAN PATENT APPLICATION NO.

EP 16 29 0023

This annex lists the patent family members relating to the patent documents cited in the above-mentioned European search report.
The members are as contained in the European Patent Office EDP file on
The European Patent Office is in no way liable for these particulars which are merely given for the purpose of information.

16-08-2016

| Patent document cited in search report | | Publication date | Patent family member(s) | | Publication date |
|---|---|---|---|---|---|
| US 2009126508 | A1 | 21-05-2009 | AT | 419514 T | 15-01-2009 |
| | | | BR | PI0615660 A2 | 24-05-2011 |
| | | | CN | 101258384 A | 03-09-2008 |
| | | | DE | 102005042579 A1 | 29-03-2007 |
| | | | EP | 1922526 A2 | 21-05-2008 |
| | | | HK | 1123601 A1 | 29-07-2011 |
| | | | IL | 189977 A | 28-11-2013 |
| | | | KR | 20080039483 A | 07-05-2008 |
| | | | UA | 88237 C2 | 25-09-2009 |
| | | | US | 2009126508 A1 | 21-05-2009 |
| | | | WO | 2007028567 A2 | 15-03-2007 |
| GB 984941 | A | 03-03-1965 | NONE | | |
| US 3811323 | A | 21-05-1974 | AU | 466948 B2 | 13-11-1975 |
| | | | AU | 4648772 A | 14-03-1974 |
| | | | BE | 788370 A1 | 02-01-1973 |
| | | | CA | 968186 A | 27-05-1975 |
| | | | CH | 549789 A | 31-05-1974 |
| | | | DE | 2244178 A1 | 15-03-1973 |
| | | | ES | 406327 A1 | 01-07-1975 |
| | | | FR | 2152668 A1 | 27-04-1973 |
| | | | GB | 1390048 A | 09-04-1975 |
| | | | IL | 40212 A | 13-03-1975 |
| | | | IT | 972437 B | 20-05-1974 |
| | | | JP | S4837163 A | 01-06-1973 |
| | | | NL | 7212191 A | 12-03-1973 |
| | | | US | 3811323 A | 21-05-1974 |
| US 2012160034 | A1 | 28-06-2012 | AU | 2010240646 A1 | 15-12-2011 |
| | | | CA | 2759536 A1 | 28-10-2010 |
| | | | CN | 102460080 A | 16-05-2012 |
| | | | EP | 2422166 A2 | 29-02-2012 |
| | | | GB | 2470104 A | 10-11-2010 |
| | | | JP | 2012524897 A | 18-10-2012 |
| | | | KR | 20120014568 A | 17-02-2012 |
| | | | NZ | 596606 A | 31-10-2014 |
| | | | SG | 175337 A1 | 28-11-2011 |
| | | | SG | 10201401709W A | 27-06-2014 |
| | | | US | 2012160034 A1 | 28-06-2012 |
| | | | WO | 2010122348 A2 | 28-10-2010 |
| US 2015376963 | A1 | 31-12-2015 | US | 2015376963 A1 | 31-12-2015 |
| | | | WO | 2016003715 A1 | 07-01-2016 |
| US 2015041122 | A1 | 12-02-2015 | US | 2015041122 A1 | 12-02-2015 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 16 29 0023

16-08-2016

| Patent document cited in search report | Publication date | Patent family member(s) | Publication date |
|---|---|---|---|
| | | WO    2013141956 A1 | 26-09-2013 |
| WO 9006500    A1 | 14-06-1990 | AU        4642689 A | 26-06-1990 |
| | | DE      68916264 D1 | 21-07-1994 |
| | | DE      68916264 T2 | 20-10-1994 |
| | | EP       0446246 A1 | 18-09-1991 |
| | | JP       2896809 B2 | 31-05-1999 |
| | | JP     H04503999 A | 16-07-1992 |
| | | SE       8804354 A | 01-12-1988 |
| | | WO       9006500 A1 | 14-06-1990 |

EPO FORM P0459

For more details about this annex : see Official Journal of the European Patent Office, No. 12/82

page 2 of 2